## Europäisches Patentamt

## European Patent Office

## Office européen des brevets

(19)

(11) Veröffentlichungsnummer: **0 225 429**
**B1**

(12) # EUROPÄISCHE PATENTSCHRIFT

(45) Veröffentlichungstag der Patentschrift:
**26.07.89**

(51) Int. Cl.⁴: **B65G 49/06**, B65G 15/58

(21) Anmeldenummer: **86111304.1**

(22) Anmeldetag: **15.08.86**

(54) **Vorrichtung für das schlupffreie Fördern von Stückgut in beliebiger Position, insbesondere in geneigter oder im wesentlichen vertikaler Stellung.**

(30) Priorität: **11.11.85  DE 3539876**

(43) Veröffentlichungstag der Anmeldung:
**16.06.87 Patentblatt 87/25**

(45) Bekanntmachung des Hinweises auf die Patenterteilung:
**26.07.89 Patentblatt 89/30**

(84) Benannte Vertragsstaaten:
**AT BE CH DE FR GB IT LI**

(56) Entgegenhaltungen:
**DE-A- 2 616 590**
**DE-A- 3 001 652**
**DE-A- 3 104 724**
**US-A- 4 108 302**

(73) Patentinhaber: **Lenhardt, Karl, Industriestrasse 2-4,
D-7531 Neuhausen-Hamberg(DE)**

(72) Erfinder: **Lenhardt, Karl, Industriestrasse 2-4,
D-7531 Neuhausen-Hamberg(DE)**

(74) Vertreter: **Twelmeier, Ulrich, Dipl.Phys. et al,
Patentanwälte Dr. Rudolf Bauer Dipl.-Ing.Helmut
Hubbuch, Dipl.Phys. Ulrich Twelmeier Westliche
Karl-Friedrich-Strasse 29-31, D-7530 Pforzheim(DE)**

ACTORUM AG

## Beschreibung

Die Erfindung geht von einer Vorrichtung für das schlupffreie Fördern von Stückgut, insbesondere von Glastafeln, mit den im Oberbegriff des Anspruchs 1 angegebenen Merkmalen. Eine solche Vorrichtung ist in der älteren, aber nicht vorveröffentlichten deutschen Patentanmeldung P 35 29 892.8 beschrieben. Diese ältere Vorrichtung hat einen von zwei parallelen, endlosen, mit ihrer Vorderseite im wesentlichen in einer gemeinsamen Ebene (der Laufebene der dort als tafelförmig angenommenen Stückgüter, welche nachstehend einfach als "Laufebene" bezeichnet wird) angeordneten und durch eine Antriebsvorrichtung in derselben Richtung und mit gleicher Geschwindigkeit angetriebenen Riemen beidseits begrenzten, zwischen den Riemen zur Laufebene hin offenen Unterdruckkanal, der durch gegenüber der Laufebene zurückversetzte Querstege in eine Anzahl von Unterdruckkammern unterteilt ist, wobei in mindestens einigen dieser Unterdrukkammern zumindest eine mit einer Unterdruckquelle verbundene Saugöffnung vorgesehen ist.

Beim Anlegen der zu transportierenden Tafeln gegen die endlosen Riemen werden sie durch den in den Unterdruckkammern, über die sie im Zuge der Transportbewegung nacheinander hinwegbewegt werden, bestehenden Unterdruck schlupffrei auf den Riemen gehalten. Die Halterkraft, die von den Unterdruckkammern auf die Tafeln ausgeübt wird, ist durch die Anzahl der durch die jeweilige Tafel geschlossenen Unterdruckkammern bestimmt. Die Haltekraft wird von den Riemen aufgenommen; deren ziehendes Trum (Arbeitstrum) ist bei der älteren Vorrichtung deshalb jeweils in einer längsverlaufenden flachen Nut eines Balkens geführt, in welchem der Unterdruckkanal ausgebildet ist, den die beiden Riemen mit ihrem Arbeitstrum beidseits begrenzen. Durch das Führen der Riemen in einer den Unterdruckkanal seitlich begrenzenden Nut wird ferner erreicht, daß von dieser Seite her keine unerwünschte Luft in den Unterdruckkanal einströmen kann, soweit die Riemen durch eine angesaugte Tafel abgedeckt sind.

Bei der älteren Vorrichtung ist nachteilig, daß der Kraftaufwand für das Fördern der Tafeln mit zunehmender Tafelgröße stark ansteigt, weil die mit der Tafelgröße zunehmende Haltekraft die Riemen in die Nuten preßt, in denen sie geführt sind, und beträchtliche Reibungskräfte zwischen Riemen und Nut erzeugt.

Der Erfindung liegt die Aufgabe zugrunde, eine Vorrichtung der eingangs genannten Art dahingehend zu verbessern, daß für das Förden weniger Kraft aufgewendet werden muß.

Diese Aufgabe wird gelöst durch eine Vorrichtung mit den im Anspruch 1 angegebenen Merkmalen. Vorteilhafte Weiterbildungen der Erfindung sind Gegenstand der Unteransprüche.

Bei der erfindungsgemäßen Vorrichtung werden die beiden Riemen, welche den Unterdruckkanal längsseits flankieren und die Ansaugkraft auffangen, nicht mehr gleitend in langen Nuten des Trägers geführt, an dessen Vorderseite der Unterdruckkanal ausgebildet ist, vielmehr ist das Arbeitstrum der Riemen auf Rollen gelagert und dadurch die vormals gleitende Reibung durch eine rollende Reibung ersetzt. Demgemäß ist die Zugkraft, die man zum Fördern von angesaugten Stückgütern braucht, im Vergleich zur älteren Vorrichtung, von welcher die Erfindung ausgeht, stark herabgesetzt. Die Erfindung nutzt die Erkenntnis, dass man, um den Unterdruckkanal an seinen beiden Längsseiten zur Aufrechterhaltung eines genügenden Unterdruckes hinreichend abdichten und die Riemen mit ihrer Vorderseite, welche die Laufebene definieren soll, in einer gleichbleibenden Ebene halten zu können, nicht darauf angewiesen ist, die Riemen gleitend und eng toleriert in einer Nut zu führen, wie es die deutsche Patentanmeldung P 35 29 892.8 noch beschreibt. Dieses Ziel läßt sich vielmehr auch erreichen bei Lagerung des Arbeitstrums der Riemen auf Rollen, denn die angestrebte Konstanz der Lage der Vorderseite des Arbeitstrums läßt sich durch eine hinreichend dichte Folge von nicht zu großen Rollen, über welche man die Riemen straff spannt, ohne Schwierigkeit erreichen, und die nötige Abdichtung des Unterdruckkkanals an den Längsseiten kann beispielsweise dadurch verwirklicht werden, dass man den Unterdruckkanal längsseits durch die beiden Riemen begrenzt, wobei deren Arbeitstrum mit ihren dem Unterdruckkanal benachbarten Flanken dicht vor einer längsverlaufenden Seitenwand des Trägers verläuft. Eine ähnliche Art der Begrenzung des Unterdruckkanals findet sich zwar auch in der Vorrichtung, wie sie in der älteren Patentanmeldung P 35 29 892.8 beschrieben ist, doch hat man in dieser älteren Vorrichtung einen verhältnismäßig flachen Riemen verwendet, der deshalb dort auch als Band bezeichnet ist. Dieser flache Riemen konnte bei der bekannten Vorrichtung zu einer hinreichenden Abdichtung führen, weil in den durch eine geförderte Tafel abgedeckten Abschnitt des Unterdruckkanals von der Längsseite her nur Luft eindringen konnte, welche über die Rückseite des Riemens, also durch den zwischen Riemen und Nur gebildeten Spalt strömte. Bei der erfindungsgemäßen Vorrichtung hingegen kann die Abdichtung in einer Ausführungsform dadurch bewirkt werden, daß die eine Flanke des Arbeitstrums des jeweiligen Riemens dicht vor einer längsverlaufenden Seitenwand des Trägers verläuft, wobei nur Luft, die durch den Spalt zwischen dem Riemen und dieser längsverlaufenden Seitenwand des Trägers hindurchströmt, in den Unterdruckkanal einströmen kann. Eine hinreichende Abdichtung kann man dabei einfach dadurch erzielen,dass man diesen Spalt hinreichend schmal und den Strömungsweg hinreichend lang ausbildet, das heißt, anstelle eines flachen Riemens einen verhältnismäßig dicken Riemen einsetzt. Die Dichtwirkung kann dabei noch verstärkt werden, indem man zur Bildung einer Labyrinthdichtung zwischen der Seitenwand und dem Riemen Längsschlitze in der jeweiligen Seitenwand des Trägers vorsieht, welche den Strömungswiderstand erhöhen.

Eine andere voteilhafte Möglichkeit zur Abdichtung der Längsseite des Unterdruckkanals besteht darin, den Unterkanal längsseits anders als bisher nicht unmittelbar durch die beiden Riemen begrenzen zu lassen, sondern durch zwei vom Träger in Richtung auf die Laufebene vorstehende, höchstens bis zur Laufebene reichende Seitenwände und die beiden Riemen mit ihrem Arbeitstrum längs der Außenseite dieser Seitenwände vorzusehen. In diesem Fall findet eine Abdichtung dadurch statt, dass diese Seitenwände einen möglichst geringen Abstand von der Laufebene einhalten, sodass zwischen den Seitenwänden und der benachbarten Oberfläche eines angesaugten Stückgutes nur ein enger Luftspalt besteht, durch welchen sich ein Luftstrom hindurchzwängen muss, welcher von der Seite her in den Unterdruckkanal eintreten will. Die abdichtende Wirkung dieses Luftspaltes kann ergänzt werden dadurch, dass die Riemen mit ihrem Arbeitstrum möglichst dicht neben den beiden den Unterdruckkanal begrenzenden Seitenwänden angeordnet werden, doch ist es bei dieser Ausführungsform der Erfindung auch grundsätzlich möglich, die Riemen in einem größeren Abstand von den Seitenwänden anzuordnen und die Aufgabe der seitlichen Abdichtung des Unterdruckkanals allein den Seitenwänden zu überlassen. Weil die Abdichtung von Seitenwänden des Unterdruckkanals übernommen werden kann, ist man freier bei der Anordnung und Führung der Riemen und der Austausch verschlissener Riemen ist umproblematisch - ein Vorteil auch gegenüber der älteren Vorrichtung. Die Abdichtung kann auch bei dieser Ausführungsform verbessert werden durch Längsschlitze in der Seitenwand, welche sich zur Bildung einer zwischen der Seitenwand und dem Stückgut liegenden Labyrinthdichtung auf der Vorderseite (das ist die der Laufebene zugewandte Seite) der jeweiligen Seitenwand befinden und welche sich zur Ausbildung einer zwischen der Seitenwand und dem ihr benachbarten Riemen liegenden Labyrinthdichtung in der dem Riemen zugewandten Flanke der jeweiligen Seitenwand befinden.

Eine solche längsseitige Abdichtung des Unterdruckkanals kann in vorteilhafter Weise ergänzt werden durch längsverlaufende, flexible, am Träger befestigte Dichtungselemente, welche zwischen dem Unterdruckkanal und den beiden Riemen angeordnet sind. Es kann sich dabei zum Beispiel um eine Leiste mit Borsten handeln, welche gegen die Laufebene gerichtet ist und mindestens bis zur Laufebene reicht und dadurch ein Strömungshindernis bildet. Es könnte sich bei dem Dichtungselement aber auch um eine längsverlaufende, flexible Dichtlippe handeln, welche gegen die Laufebene gerichtet ist und über diese hinausreicht, so dass sie beim Ansaugen eines zu fördernden Stückgutes diesem mit einem gewissen Auflagedruck anliegt. Sieht man obendrein vor, dass die Dichtlippe von vornherein in Richtung auf den benachbarten Riemen abgebogen ist, dann wird sie durch den im Unterdruckkanal herrschenden Unterdruck mit zusätzlicher Kraft gegen das angesaugte Stückgut gedrückt.

Eine besonders vorteilhafte Abdichtung erreicht man mit einer Ausführungsform der Erfindung, wie sie im Anspruch 9 wiedergegeben ist. Bei dieser Ausführungsform wird der Unterdruckkanal beidseits durch zwei längsverlaufende Seitenwände begrenzt. Auf der dem Unterdruckkanal abgewandten Seite dieser Seitenwände schließt sich jeweils eine Leiste an, welche sich in Laufrichtung der Riemen erstreckt und mit ihrer Vorderseite ebenfalls nahezu bis an die Laufebene heranreicht. In Anpassung an diese Leisten haben die beiden Riemen in ihrem dem Unterdruckkanal benachbarten Bereich auf ihrer Vorderseite eine längsverlaufende Stufe, deren vorspringender Teil auf dem Arbeitstrum die Laufebene definiert, während der demgegenüber zurückversetzte Randstreifen der Riemen mit seiner Vorderseite der Rückseite der betreffenden Leiste anliegt. Vorzugsweise haben die beiden Riemen zwei solche Stufen, durch welche ein vorspringender, mittlerer Streifen und zwei demgegenüber zurückversetzte Randstreifen auf der Riemenvorderseite ausgebildet werden und für den vom Unterdruckkanal entfernt liegenden Randstreifen des Riemens ist jeweils eine weitere, sich in Laufrichtung der Riemen erstreckende Leiste vorgesehen und am Träger befestigt. Diese beiden weiteren Leisten liegen mit ihrer Vorderseite ebenfalls dicht hinter der Laufebene und ihre Rückseite dient der Anlage des zweiten, vom Unterdruckkanal entfernten Randstreifens des jeweiligen Riemens.

Die so gebildeten Randstreifen der Riemen wirken nach Art einer Dichtlippe. Durch den sich im Unterdruckkanal aufbauenden Unterdruck werden sie - und das gilt vor allem für die beiden dem Unterdruckkanal benachbarten Randstreifen - gegen die Rückseite der Leisten gedrückt. Gleichzeitig übt das angesaugte, zu fördernde Stückgut infolge der Ansaugwirkung einen Gegendruck auf die Riemen aus, nämlich auf deren vorspringenden Teil, welcher geringfügig über die Vorderseite der Leisten vorsteht. Dieser Gegendruck bewirkt, dass die Riemen mit ihren Randstreifen nicht zu stark gegen die Rückseite der Leisten gedrückt werden. Diese ausserordentlich günstige Wirkung von Druck und Gegendruck bewirkt einerseits eine gute seitliche Abdichtung des Unterdruckkanals und gewährleistet andererseits, dass die Reibung zwischen den Riemen und den Leisten gering bleibt, so dass selbst großformatige Stückgüter zuverlässig gehalten und mit geringem Kraftaufwand gefördert werden können. Selbst schwere Glastafeln mit einer Größe von mehreren Quadratmetern können mit einer solchen erfindungsgemäßen Vorrichtung in vertikaler Lage sicher gehalten werden und zu ihrer Bewegung ist ein so geringer Kraftaufwand nötig, dass bei abgeschaltetem Riemenantrieb ein Verschieben von Hand leicht möglich ist. Bei vergleichbaren Vorrichtungen nach dem Stand der Technik ist das nicht möglich, da dort durch das Ansaugen der großflächigen Glastafeln ein schier unüberwindlicher Reibungswiderstand aufgebaut wird.

In einer vorteilhaften alternativen Ausführungsform kann man anstelle einer der weiteren, vom Unterdruckkanal entfernt liegenden Leisten eine Zeile von Rollen vorsehen, deren Achsen im rechten Winkel zur Laufebene orientiert sind, wobei die Rollen vor der Laufebene liegende Laufflächen haben und mit ihrer hinter der Laufebene liegenden Flanke der Vorderseite des betreffenden Randstreifens des einen Riemens anliegen. Diese Ausführungsform eignet sich besonders für Vorrichtungen zum Fördern von tafelförmigem Stückgut in senkrechter oder geneigter Lage. In diesem Fall können die Rollen zur Abstützung des unteren Randes der Tafeln dienen und bieten dabei gleichzeitig eine Sicherheit gegen ein Herabfallen der Tafeln im Falle eines plötzlichen Druckanstiegs im Unterdruckkanal.

Für den vorspringenden Teil der Riemen verwendet man zweckmässigerweise einen anderen Werkstoff als für seine Randstreifen, und zwar sollte der vorspringende Teil der Riemen eine Oberfläche mit hohem Reibungskoeffizienten haben, was einen schlupffreien Transport des Stückgutes begünstigt, und die Randstreifen sollten zur Erzielung eines möglichst reibungsarmen Laufes einen möglichst niedrigen Reibungskoeffizienten aufweisen.

Um den Zustrom von Luft in Laufrichtung der Riemen in den Bereich hinter einem angesaugten Stückgut möglichst weitgehend zu unterbinden, ist bei der erfindungsgemäßen Vorrichtung ebenso wie bei der älteren Vorrichtung der Unterdruckkananl zweckmäßigerweise durch quer zur Laufrichtung angeordnete, höchstens bis zur Laufebene reichende Stege in eine Folge von Unterdruckkammern unterteilt, in welchen wenigstens je eine mit der Unterdruckquelle verbundene Saugöffnung vorgesehen ist. Die Haltekraft, die von den einzelnen Unterdruckkammern auf die Stückgüter ausgeübt wird, ist durch die Anzahl der durch das jeweilige Stückgut abgedeckten Unterdruckkammern bestimmt. Die querverlaufenden Stege sollten möglichst dicht bis an dieLaufebene der Vorrichtung herangeführt sein, damit zwischen ihnen und dem angesaugten Stückgut ein möglichst enger Spalt gebildet wird. Da andererseits das angesaugte Stückgut nicht gegen diese Stege gedrückt werden soll, sind die Stege vorzugsweise so angeordnet, daß die rechtwinklig zur Laufrichtung durch ihre Längsmittellinie gelegte Ebene jeweils die Achsen eines Paares von den die Riemen stützenden Rollen enthält, so dass die Abstützung der Riemen gerade in der Flucht der Stege am besten ist und keine Gefahr besteht, dass durch einen unter dem Ansaugdruck nachgebenden Riemen das Stückgut doch zur Anlage an einem der Stege gelangt.

Zweckmäßigerweise liegen die Vorderseiten der Seitenwände des Unterdruckkanals, der Stege, welche den Unterdruckkanal quer unterteilen, und der für die Abdichtung vorgesehenen Leisten, soweit sie vorhanden sind, in einer gemeinsamen Ebene, wobei der Abstand, der von der Laufebene eingehalten werden sollte, am besten zwischen 0,5 und 0,8 mm liegt. Der Unterdruckkanal selbst sollte jedoch tiefer sien und eine Tiefe zwischen 5 und 10 mm, vorzugsweise von 8 mm haben, gemessen von der Laufebene aus, welche durch die Vorderseiten der Riemen definiert wird. Bei einem so bemessenen Abstand zwischen der Laufebene und dem Boden des Unterdruckkanals ist gewährleistet, dass aus dem Unterdruckkanal mehr Luft abgesaugt werden kann, als zwischen den Riemen und dem Träger, an dessen Vorderseite der Unterdruckkanal ausgebildet ist, nachströmen kann.

Vorzugsweise ist im Träger hinter den Saugöffnungen jeweils ein Schließkörper, insbesondere ein Ventilkegel, vorgesehen. Diese Schließkörper sollen zum Verschließen der Saugöffnungen unabhängig voneinander betätigbar sein.

Das macht es möglich, beim Fördern von Stückgut jene Saugöffnungen, die durch das Stückgut nicht abgedeckt sind, zu verschließen. Dies hat nicht nur den Vorteil, dass man mit einem weniger leistungsfähigen Saugaggregat auskommt; die verminderte Saugleistung äußert sich auch in einem verminderten Reibungswiderstand vornehmlich beim Fördern von Stückgut, welches eine größere Anzahl von Saugöffnungen des Unterdruckkanals abdeckt. Da man die Leistung von Saugaggregaten in Gestalt von Gebläsen nicht gut regeln kann, ist es nämlich erforderlich, die Gebläseleistung zum Erzielen einer ausreichenden Haltekraft auch bei Stückgütern, welche nur wenige Ansaugöffnungen überdecken, überzudimensionieren, was beim Fördern von größeren Stückgütern dann zu einem entsprechend erhöhten Reibungswiderstand führt. Dem kann man durch die einzeln betätigbaren Schließkörper hinter den Saugöffnungen begegnen.

Die Rollen, welche das Arbeitstrum der Riemen abstützen, sind zweckmässigerweise in dichter Folge beidseits an dem Träger, an dessen Vorderseite der Unterdruckkanal ausgebildet ist, angebracht. Zweckmässigerweise handelt es sich dabei um untereinander gleiche, freilaufende Rollen, welchen das Arbeitstrum der Riemen aufliegt. Die Riemen sind endlos und deshalb über zwei Umlenkrollen geführt, von denen zweckmässigerweise eine zum Spannen des Riemens verstellbar gelagert und die andere zum Ziehen des Riemens antreibbar ist. Anstelle von einzeln am Träger gelagerten Rollen könnte man das Arbeitstrum der beiden Riemen aber auch durch je eine Rollenkette abstützen, deren vorderer Kettenzug dementsprechend parallel zur Laufrichtung der Riemen angeordnet und rückseitig unterstützt ist, wobei diese rückseitige Unterstützung nun nicht durch eine Folge von Rollen erfolgen muss, sondern durch einen Teil des Trägers, an dessen Vorderseite der Unterdruckkanal ausgebildet ist, oder durch eine mit ihm starr verbundene, zur Laufrichtung parallele Schiene erfolgen kann. Als Kette verwendet man zweckmässigerweise eine über zwei Umlenkräder geführte Endloskette, wobei eines der Umlenkräder zum Spannen der Kette verstellbar gelagert sein muss. Zum Antrieb des Riemens, welcher der Kette aufliegt, sieht man eine gesonderte, antreibbare Riemenscheibe vor, welche ausserhalb des von der Kette umschlossenen Bereiches liegt, und zwar in Laufrichtung der Vorrichtung gesehen der Kette vorgelagert. Die zweite Umlenkung des Riemens kann durch das eine Umlenkrad erfolgen, welches am gegenüberliegenden Ende des Riemens auch die Kette umlenkt. Um die Kette und den Riemen unabhängig voneinander spannen zu können, sind vorzugsweise beide Umlenkräder der Kette unabhängig voneinander verstellbar.

Die Verwendung einer nicht angetriebenen Rollenkette ist eine preiswerte Lösung zur reibungsarmen Abstützung der beiden umlaufenden Riemen.

Da die Seitenstege einer Rollenkette breiter sind als der Durchmesser der Rollen, bietet eine Rollenkette in vorteilhafter Weise zugleich eine Seitenführung für einen von der Kette unterstützen Riemen. Wird der Riemen nicht durch eine Rollenkette, sondern durch eine Folge von einzeln am Träger des Unterdruckkanals gelagerten Rollen unterstützt, muss man auf andere Weise für eine Seitenführung des Riemens sorgen. Grundsätzlich könnte die Seitenführung dadurch erfolgen, dass man die Rollen in einem Ausschnitt des Trägers des Unterdruckkanals anordnet und Seitenwandbereiche dieses Ausschnitts zur Seitenführung des Riemens benutzt. Günstiger und reibungsärmer läßt sich jedoch ein Riemen führen, wenn man die Rollen als Riemenscheiben ausbildet, also mit einer umlaufenden Vertiefung versieht, in welcher der Riemen läuft. Besonders geeignet im Hinblick auf eine exakte Führung und Justierung der Riemen ist die Nutzung von Keilriemen in Verbindung mit entsprechend ausgebildeten Keilriemenscheiben als unterstützende Rollen.

Die Riemen können grundsätzlich unterschiedliche Querschnittsgestalt haben: Man kann im Querschnitt kreisrunde, rechteckige, oder insbesondere trapezförmige Riemen (Keilriemen) verwenden. Besonders vorteilhaft ist es jedoch, Riemen zu verwenden, die im Querschnitt ein T-Profil aufweisen, wobei der senkrechte Schenkel des T wie bei einem Keilriemen keilförmig ausgebildet sein kann und der Querbalken des T-Profils vorzugsweise breiter ist als die Rollen bzw. die Rollenkette, wodurch sie zum einen eine zusätzliche Abstützung des Riemens auf den Seitenteilen einer profilierten Rolle (Keilriemenscheibe) ermöglicht und andererseits ein dichtes Heranführen der Riemenflanke und die Begrenzung des Unterdruckkanals ermöglicht, um diesen mit Hilfe der Riemenflanke abzudichten.

Besonders bevorzugt ist die Verwendung von Riemen, welche als Zahnriemen ausgebildet sind, deren Zähne sich an dem Querbalken des T-Profils befinden. Über ein angetriebenes Umlenkzahnrad läßt sich ein solcher Zahnriemen schlupffrei bewegen. Damit sich der Zahnriemen ohne Verziehen antreiben läßt, sind die Zähne zweckmässigerweise zu beiden Seiten des Fusses des T-Profils an dessen Querbalken angeordnet und entsprechend muss dann auch das Umlenkzahnrad zwei dazu passende Zahnkränze haben. Die das Arbeitstrum unterstützenden Rollen benötigen hingegen keine Verzahnung. Man führt sie deshalb schmaler aus als die Umlenkzahnräder, nämlich nur in einer Breite, die übereinstimmt mit der zwischen den Zahnreihen gemessenen Breite der Riemen.

Die erfindungsgemäße Fördervorrichtung eignet sich für unterschiedliche Stückgüter. Insbesondere eignet sie sich für tafelförmige Stückgüter, vor allem für Glastafeln, wobei zum Fördern von großflächigen, schweren Glastafeln mehrere solche Fördervorrichtungen mit übereinstimmender Läuffläche parallel nebebeinander zu einer Baueinheit zusammengebaut werden können, sodass die großen Tafeln über ihre Fläche verteilt an mehreren Stellen angesaugt und angetrieben werden können. Die erfindungsgemäße Fördervorrichtung eignet sich aber auch zum Fördern von kleinen und leichten Gegenständen wie z.B. von Deckeln. Grundsätzlich lassen sich mit der Vorrichtung auch andere als tafelförmige Gegenstände fördern, sofern sie einen hinreichend großen, zum Ansaugen durch den Unterdruckkanal geeigneten Oberflächenbereich haben. Insbesondere eignet sich die erfindungsgemäße Vorrichtung für das Fördern von Gegenständen, insbesondere Tafeln, in lotrechter oder annähernd lotrechter Position, weil die Gegenstände durch Ansaugen an die Riemen gehalten werden können, aber nicht auf die Riemen aufgestellt werden müssen.

Ausführungsbeispiele der erfindungsgemäßen Fördervorrichtung sind schematisch in den beigefügten Zeichnungen dargestellt.

Figur 1 zeigt eine Fördervorrichtung in der Vorderansicht,
Figur 2 zeigt die Fördervorrichtung aus Fig. 1 in der Draufsicht,
Figur 3 zeigt den Schnitt entlang der Schnittlinie III-III durch die in Fig. 1 dargestellte Vorrichtung,
Figur 4 zeigt den Schnitt längs der Schnittlinie IV-IV durch die in Fig. 1 dargestellte Vorrichtung,
Figur 5 zeigt den entlang der Schnittlinie V-V genommenen Längsschnitt durch die in Fig. 1 dargestellte Vorrichtung,
Figur 6 zeigt einen Abschnitt der Fördervorrichtung aus Fig. 1 in einer Schrägansicht, jedoch mit abgewandeltem Riemenprofil,
Figur 7 zeigt einen Schnitt entsprechend der Fig. 4 durch eine abgewandelte Fördervorrichtung,
Figur 8 zeigt eine Abwandlung des in Fig. 7 eingekreisten Detail X,
Figur 9 zeigt eine abgewandelte Fördervorrichtung in einer Darstellung entsprechend der Fig. 2, wobei die Riemen jedoch nicht durch einzelne Rollen, sondern durch eine Rollenkette abgestützt sind,
Figur 10 zeigt ein weiteres Ausführungsbeispiel einer Fördervorrichtung in der Vorderansicht,
Figur 11 zeigt die Fördervorrichtung aus Fig. 10 in der Draufsicht,
Figur 12 zeigt den Schnitt entlang der Schnittlinie XII-XII durch die in Fig. 10 dargestellte Vorrichtung, und
Figur 13 zeigt den Schnitt entlang der Schnittlinie XIII-XIII durch die in Fig. 1 dargestellte Vorrichtung.

In den unterschiedlichen Ausführungsbeispielen sind zur Vereinfachung gleiche oder einander entsprechende Teile mit übereinstimmenden Bezugszahlen bezeichnet worden.

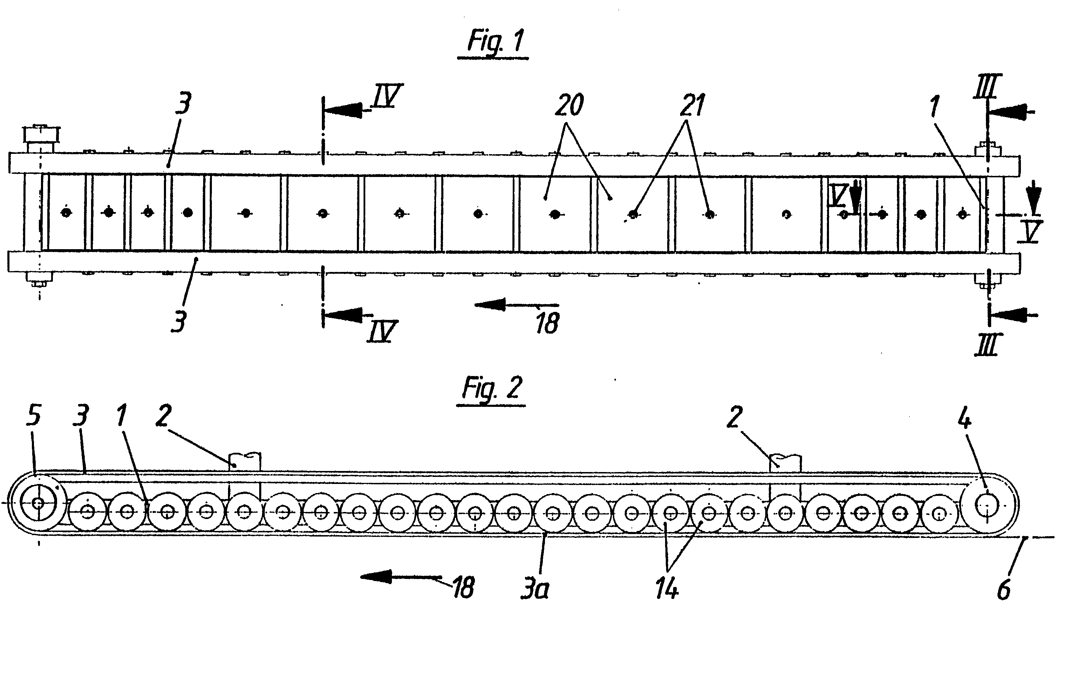

In dem in den Fig. 1 bis 5 dargestellten Ausführungsbeispiel hat die Fördervorrichtung als tragendes Element einen langgestreckten Hohlprofilbalken, welcher an seinen beiden Enden geschlossen und über zwei an seiner Rückseite angesetzte Rohrstutzen 2 mit der Saugseite eines nicht dargestellten Gebläses verbunden ist. An den beiden Längsseiten des Hohlprofilbalkens sind zwei endlose Riemen 3 angeordnet, welche um je zwei Umlenkrollen 4 und 5 herumgeführt sind. Die Umlenkrollen 4 und 5 sind am Hohlprofilbalken 1 oder an Halterungen angebracht, welche mit dem Hohlprofilbalken fest verbunden sind. Sie sind so angeordnet, dass das Arbeitstrum 3a der Riemen parallel zur Vorderseite des Hohlprofilbalkens 1 verläuft und geringfügig - vorzugsweise zwischen 0,5 und 1 mm über den vorderen Rand des Hohlprofilbalkens vorsteht. Die Vorderseiten der Arbeitstrums 3a der beiden Riemen definieren gemeinsam eine Ebene, welche hier als die Laufebene 6 bezeichnet wird.

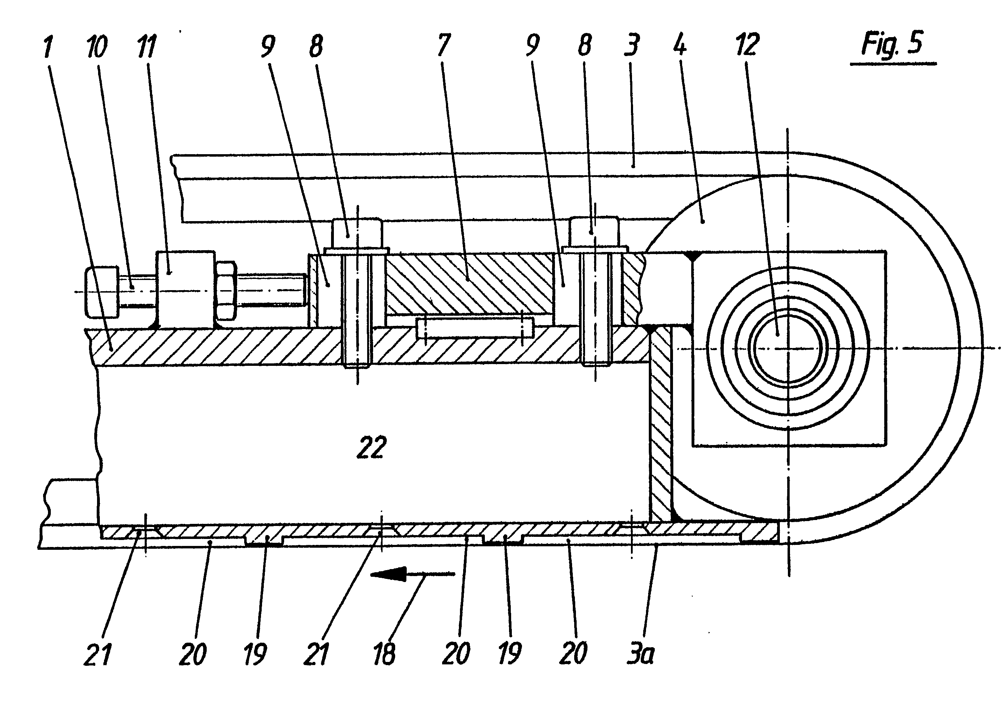

Um die Riemen 3 spannen zu können, ist eine der beiden Umlenkrollen, nämlich die Umlenkrolle 4 an einer Halterung 7 befestigt, welche ihrerseits durch Schrauben 8, welche durch Langlöcher 9 in der Halterung 7 hindruchgreifen, mit dem Hohlprofilbalken 1 verschraubt ist. Im Rahmen des Spiels, welches die Schrauben 8 in der Halterung 7 haben, ist die Halterung 7 deshalb in Längsrichtung des Hohlprofilbalkens 1 verstellbar; die Verstellung erfolgt mittels einer Spannschraube 10, welche in einen am Hohlprofilbalken 1 angeschweißten Gewindeblock 11 eingedreht ist und gegen das Ende der Halterung 7 gerichtet ist (siehe Fig. 5).

Um die beiden Riemen 3 unabhängig voneinander spannen zu konnen, sind die beiden am selben Ende des Hohlprofilbalkens 1 angeordneten Umlenkrollen 4 nicht auf einer gemeinsamen, sondern auf getrennten Wellen 12 gelagert. Die am gegenüberliegenden Ende des Hohlprofilbalkens gelagerten Umlenkrollen 5 hingegen sind nicht in Längsrichtung des Hohlprofilbalkens verstellbar gelagert; sie werden durch einen nicht dargestellten Motor synchron angetrieben und sind deshalb auf einer gemeinsamen Antriebsachse 13 gelagert.

Zwischen den Umlenkrollen 4 und 5 sind beidseits des Hohlprofilbalkens 1 an diesem untereinander gleiche Rollen 14 mit zu den Umlenkrollen 4 und 5 parallelen Drehachsen frei drehbar gelagert; sie sind in dichter Folge angeordnet und dienen zum Abstützen des Arbeitstrums 3a der beiden Riemen. Die Rollen 14 sind auf gerader Linie so angeordnet, dass sie gemeinsam mit den Umlenkrollen 4 und 5 das Arbeitstrum 3a der Riemen so führen, dass dessen Vorderseite auf voller Länge in einer Ebene, nämlich der so definierten Laufebene 6 der Vorrichtung liegt.

Die Riemen 3 sind als Keilriemen und dementsprechend die Umlenkrollen 4 und 5 und die stützenden Rollen 14 als Keilriemenscheiben ausgebildet, in welchen die Riemen 3 spielfrei geführt sind. Im Querschnitt haben die Riemen 3 eine T-förmige Gestalt, wobei der Querbalken des T breiter ist als die stützenden Rollen 14 und ebenso breit wie die Umlenkrollen 4 und 5, sodass sich der T-Balken der Riemen auf den Seitenteilen der Rollen 4,5 und 14 abstützen kann, wodurch eine genaue Ausrichtung der Vorderseite der Riemen 3 relativ zur Vorderseite des Hohlprofilbalkens 1 möglich ist.

Der Hohlprofilbalken ist auf seiner Vorderseite als zur Laufebene 6 hin offener Unterdruckkanal 15 ausgebildet, welcher dadurch gebildet ist, dass entlang der beiden Längsseiten des Hohlprofilbalkens von diesem zwei niedrige Seitenwände 16 gegen die Laufebene 6 gerichtet vorstehen; die Höhe dieser Seitenwände über der demgegenüber etwas zurückspringenden Vorderseite 17 des Hohlprofilbalkens beträgt zwischen 5 und 10 mm. Die Riemen 3 stehen mit ihrem Arbeitstrum 3a jedoch noch geringfügig über die Seitenwände 16 vor, nämlich um ungefähr 0,5 bis 0,8 mm. Der längsseits durch die Seitenwände 16 abgegrenzte Unterdruckkanal 15 ist quer zur Laufrichtung 18 durch Stege 19 unterteilt, deren Vorderseite in einer gemeinsamen Ebene mit der Vorderseite der Seitenwände 16 liegt. In der Mitte einer jeden durch die Stege 19 und die Seitenwände 16 abgegrenzten Kammer 20 ist eine Saugöffnung 21 vorgesehen, welche die jeweilige Kammer 20 mit dem Innenraum 22 des Hohlprofilbalkens verbindet, aus welchem die Luft durch die Rohrstutzen 2 abgesaugt wird. Der Innenraum 22 des Hohlprofilbalkens stellt deshalb eine Unterdruckquelle für die auf der Vorderseite des Hohlprofilbalkens gebildeten Kammern 20 dar, die deshalb als Unterdruckkammern bezeichnet werden und ihrer Gesamtheit den erfindungsgemäßen Unterdruckkanal 15 bilden.

Will man mit einer solchen Vorrichung einen Gegenstand, beispielsweise eine Glastafel 23 fördern, dann wird die Glastafel 23 an das Arbeitstrum 3a der beiden Riemen angelegt und durch den sich zwischen der Glastafel 23 und dem Hohlprofilbalken 1 rasch aufbauenden Unterdruck angesaugt, sodass sie schlupffrei gefördert werden kann. Die Unterdruckkammern 20 werden dazu zweckmässigerweise so bemessen, dass mehrere von ihnen durch eine Glastafel 23 abgedeckt werden. Für Glastafeln eignen sich beispielsweise Fördervorrichtungen, deren Unterdruckkammern durch 15-20 cm lange Querstege 19 begrenzt sind, die im mittleren Bereich der Fördervorrichtung einen Abstand von 15-20 cm aufweisen, an den beiden Enden des Hohlprofilbalkens jedoch nur noch einen Abstand von 5-10 cm, um auch am Beginn und am Ende der Fördervorrichtung einen schlupffreien Transport gewährleisten zu können.

Die quer verlaufenden Stege 19 gewährleisten, dass wenigstens in den mittleren der durch eine Glastafel 23 abgedeckten Unterdruckkammern 20 ein Unterdruck in der gewünschten und erforderlichen Höhe aufrecht erhalten werden kann, während die längsverlaufenden Seitenwände 16, welche in einem nur geringen Abstand von der Glastafel 23 enden, dafür sorgen, dass nur wenig Luft con den Längsseiten her in die durch eine Glastafel 23 abgedeckten Unterdruckkammern 20 einströmen kann. Die Abdichtung an den Längsseiten wird dadurch ergänzt, dass die Riemen 3 mit möglichst geringem Abstand neben den Seitenwänden 16 des Unterdruckkanals 15 angeordnet sind, sodass auch der dazwischen gebildete Luftspalt, durch welchen sich Luft,die von der Längsseite her in den Unterdruckkanal einströmen will, hindurchzwängen muss, nur sehr eng ist.

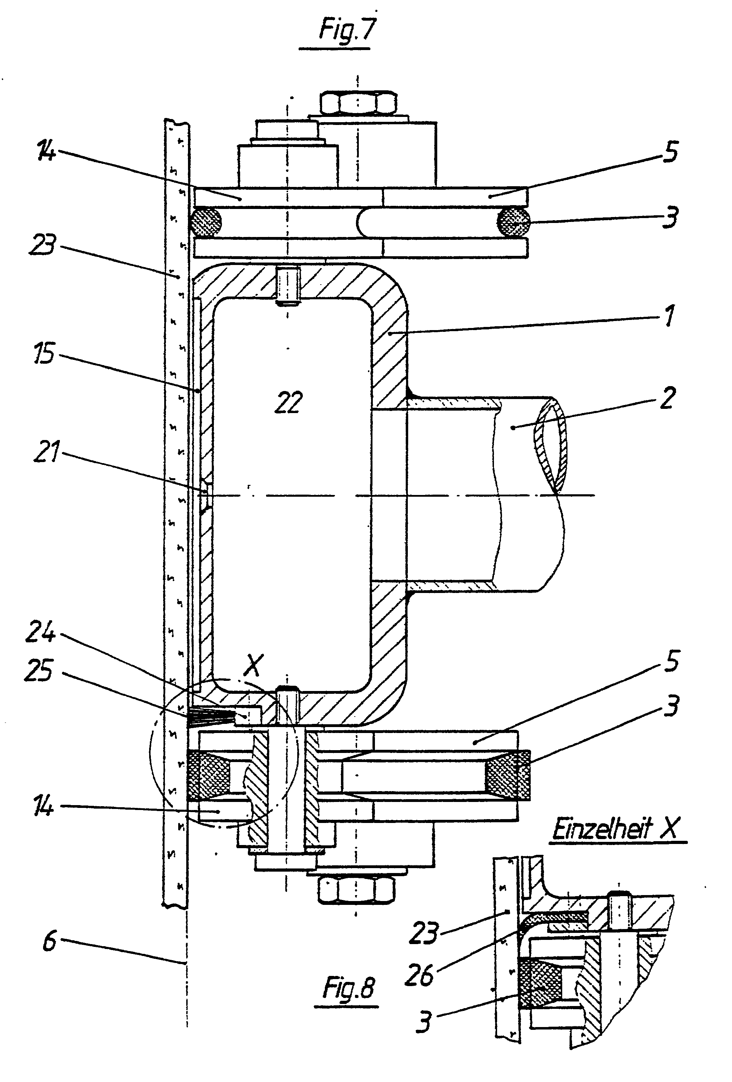

Zur längsseitigen Abdichtung der Unterdruckkammern 20 kann man zwischen dem Unterdruckkanal 15 und den Riemen 3 gesonderte Abdichtelemente vorsehen. Ein Beispiel eines solchen zusätzlichen Abdichtelementes zeigt die Fig. 7. In diesem Ausführungsbeispiel ist der Hohlprofilbalken aussenseitig abgestuft und in dieser Stufe ist eine Bürstenleiste 24 befestigt, deren Borsten 25 gegen die Laufebene 6 gerichtet sind und mindestens bis zu dieser Laufebene reichen,vorzugsweise auch noch ein wenig darüberhinaus, damit sie sich an einen zu fördernden Gegenstand, beispielsweise an eine Glastafel 23, mit leichtem Andruck anlegen. Die Wirksamkeit dieser zusätzlichen Abdichtung hängt natürlich davon ab, wie dicht die Borsten 25 angeordnet sind.

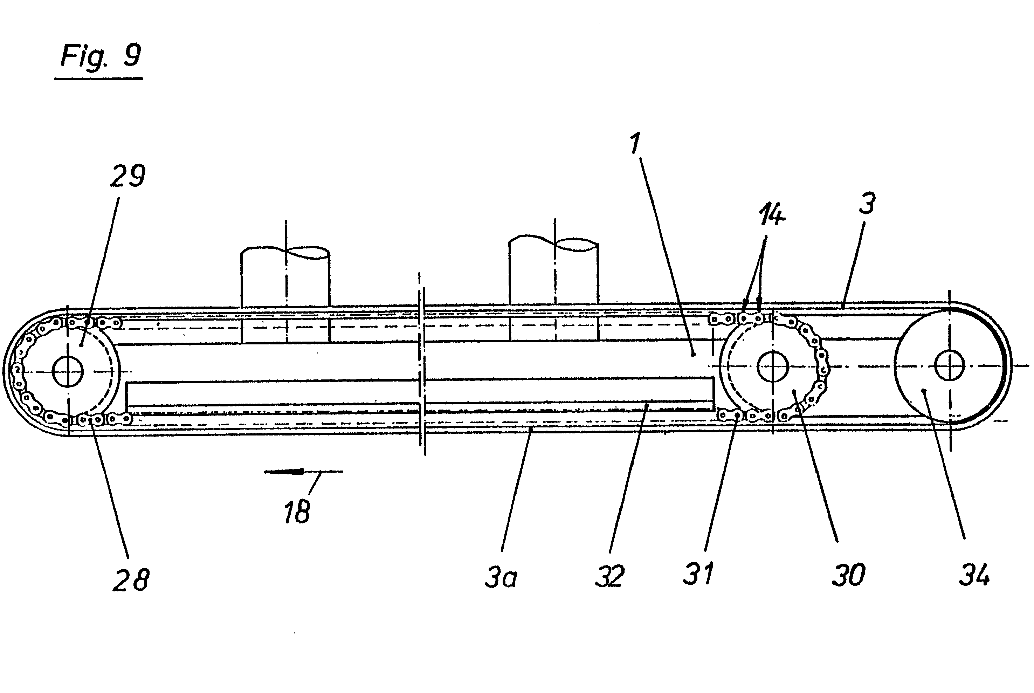

Eine andere Möglichkeit einer zusätzlichen Abdichtung zeigt die Fig. 8. Dort ist anstelle einer Bürstenleiste am Hohlprofilbalken 1 beidseits eine längsverlaufende, elastische Dichtlippe 26 vorgesehen, welche gegen die Laufebene 6 gerichtet ist, jedoch darüberhinaus, und in Richtung auf den benachbarten Riemen 3 abgebogen ist. Dadurch legt sich die Dichtlippe mit Vorspannung gegen die zu fördernde Glastafel 23 an und wird durch den sich im Unterdruckkanal 15 aufbauenden Unterdruck mit zusätzlicher Kraft gegen die Glastafel 23 gedrückt.

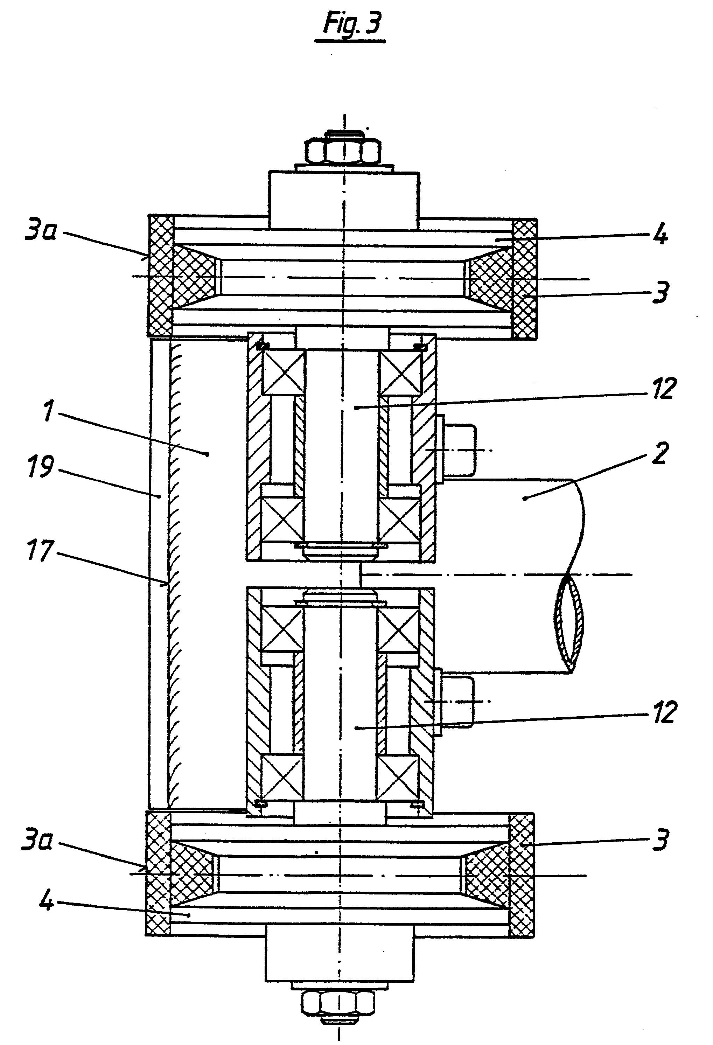

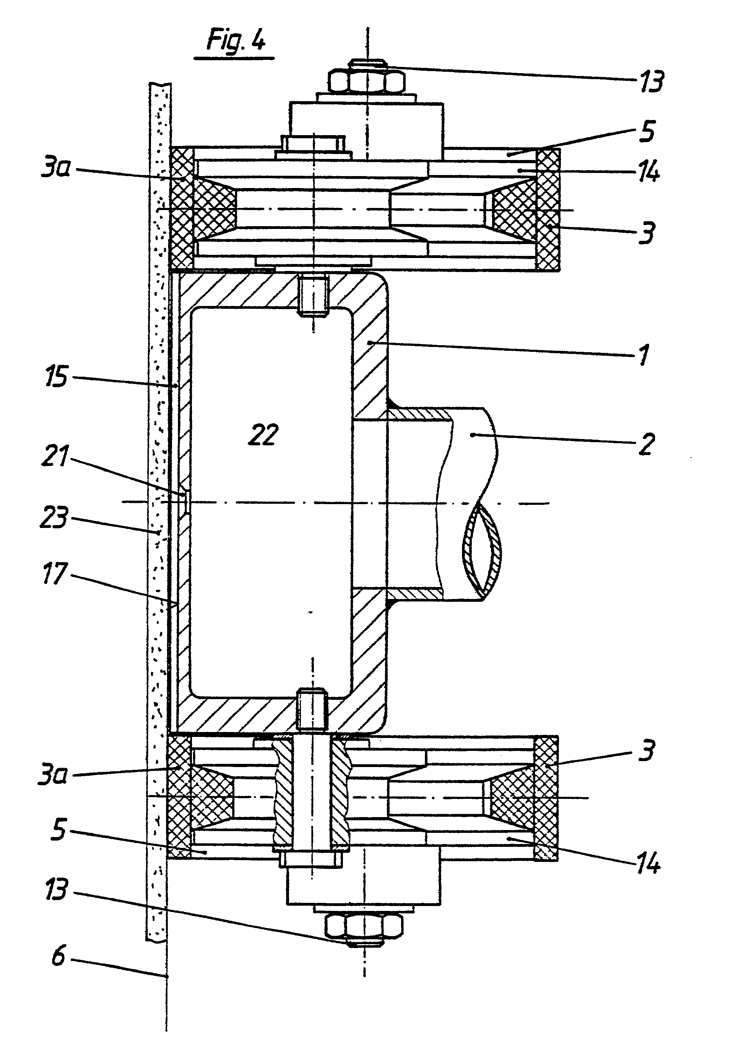

Die Figur 7 zeigt darüberhinaus, dass man Riemen 3 von anderer als in den Fig. 3 und 4 dargestellten Querschnittsgestalt verwenden kann: Im einfachsten Fall genügt ein Riemen mit im Querschnitt kreisrunder Gestalt, wie er im oberen Teil der Fig. 7 dargestellt ist. Vorteilhafter ist ein Keilriemen, wie er im unteren Teil der Fig. 7 und in Fig. 8 dargestellt ist und welcher sich von dem in Fig. 3 und 4 dargestellten Keilriemen darin unterscheidet, dass er im Querschnitt nicht T-förmig ist, sondern dass der T-Balken fortgefallen ist. Diese etwas einfacheren Riemen vermögen den Unterdruckkanal 15 an der Längsseite nicht so gut abzudichten, wie der in den Fig. 3 und 4 dargestellte T-förmige Keilriemen, so dass man sie wie in Fig. 7 (unten) und in Fig. 8 dargestellt, zweckmässigerweise in Kombination mit einem zusätzlichen Dichtelement 24 bzw. 26 einsetzt.

Die Fig. 7 zeigt weiterhin, dass man den Hohlprofilbalken 1 an den vorderen Längskanten unterschiedlich ausbilden kann: Während er im erstem Ausführungsbeispiel scharfkantig rechtwinklig ausgebildet ist, ist er im Ausführungsbeispiel in Fig. 7 im oberen Teil der Darstellung am vorderen Rand leicht gerundet. Die scharfkantige Ausbildung hat den Vorteil, dass sie zu einem etwas größeren Strömungswiderstand führt und deshalb eine Abdichtwirkung entfaltet.

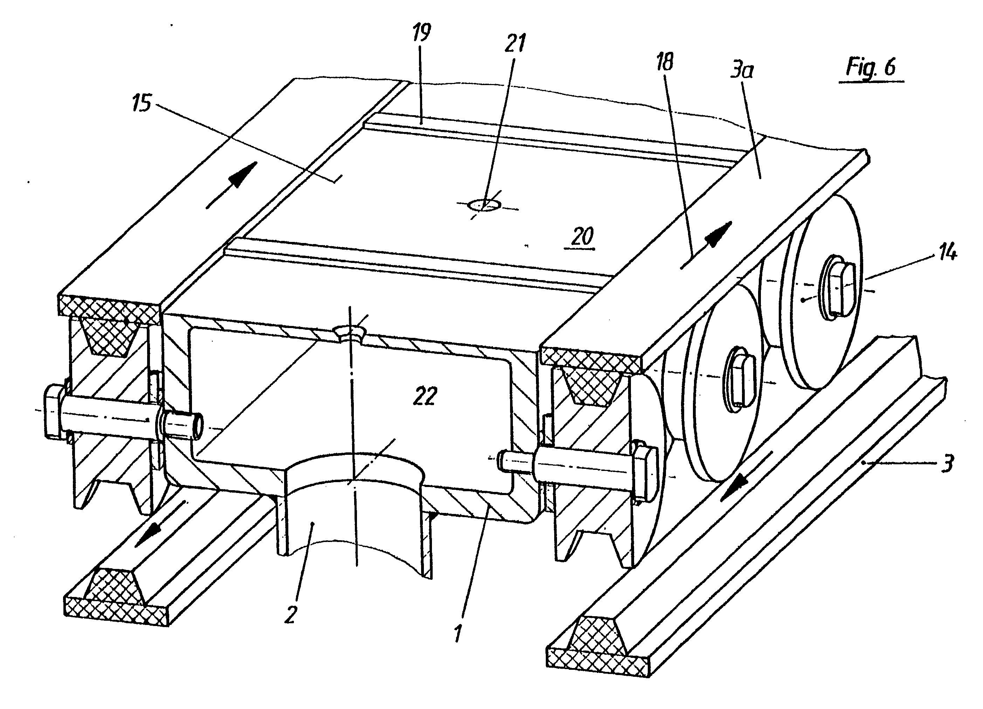

Eine weitere Abwandlung der in Fig. 1-5 dargestellten Fördervorrichtung zeigt die Fig. 6: sie unterscheidet sich vom ersten Ausführungsbeispiel nur in zwei Punkten: Die Riemen 3 sind im Querschnitt T-förmige Keilriemen mit einer geringen, längsverlaufenden Vertiefung 27 in ihrer Vorderseite, und auf die im ersten Ausführungsbeispiel vorgesehenen vorspringenden Seitenwände 16 wurde verzichtet, so dass der Unterdruckkanal 15 an den Längsseiten ausschließlich durch die beiden Riemen 3 begrenzt ist, welche mit ihrem Arbeitstrum 3a sehr dicht an die Flanken des Hohlprofilbalkens 1 anschließen, damit durch den dort bestehenden Luftspalt möglichst wenig Luft in die Unterdruckkammer 20 angesaugt werden kann.

Den in den Fig. 1 bis 7 dargestellten Ausführungsformen ist gemeinsam, dass sich die Querstege 19 jeweils in der Flucht der Achsen von stützenden Rollen 14 befinden.

Die in Fig. 9 dargestellte Ausführungsform der Fördervorrichtung unterscheidet sich von der in Fig. 2 dargestellten darin, dass zum Stützen der Riemen 3 nicht einzeln am Hohlprofilbalken 1 gelagerte Rollen 14 vorgesehen sind, sondern stattdessen eine Rollenkette 28, welche um Umlenkräder 29 und 30 gelegt und straff gespannt ist. Zwischen den Umlenkrädern 29 und 30 ist der vordere Kettenzug 31 rückseitig durch eine starr mit dem Hohlprofilbalken 1 verbundene Schiene 32 abgestützt, welche parallel zum Hohlprofilbalken verläuft. Ein im Querschnitt T-förmiger Riemen 3, der mit seinem mittleren Schenkel zwischen die Seitenteile 33 der Kette eintaucht, ist so auf der Rollenkette aufliegend indirekt um eines der Umlenkräder, nämlich um das Umlenkrad 29 der Rollenkette 28 herumgeführt; der Riemen 3 ist jedoch um einiges länger als die Rollenkette 28 und deshalb an dem dem Umlenkrad 29 gegenüberliegenden Ende der Rollenkette über diese hinausgeführt und dort um ein gesondertes Umlenkrad 34 herumgeführt, welches die Gestalt einer Riemenscheibe hat und angetrieben ist. Um den Riemen 3 und die Rollenkette 28 unabhängig voneinander straff spannen zu können, sind die Umlenkräder 29 und 30 beide in Längsrichtung des Hohlprofilbalkens 1 verstellbar: Durch Verschieben des Umlenkrades 29 werden die Kette 28 und der Riemen 3 gleichzeitig gespannt, durch Verschieben des Umlenkrades 30 wird die Rollenkette 28 unabhängig vom Riemen 3 gespannt.

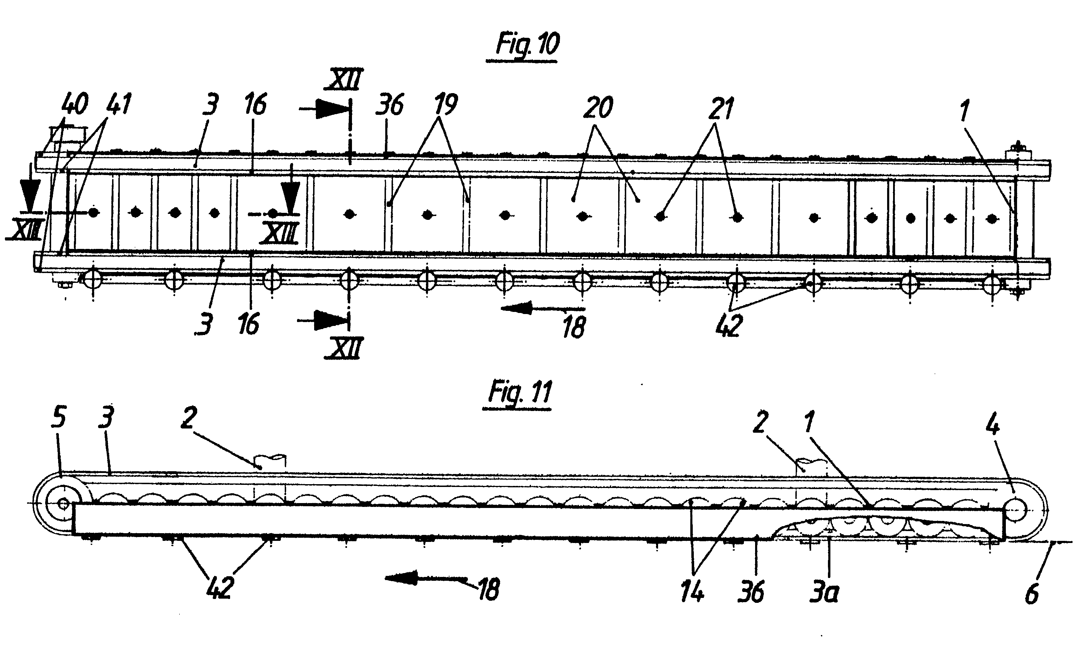

Das in den Fig. 10 bis 13 dargestellte Ausführungsbeispiel unterscheidet sich von dem in den Fig. 1 bis 6 dargestellten Ausführungsbeispielen im wesentlichen in der Ausbildung der Riemen, in der Abdichtung des Unterdruckkanals, im Vorhandensein von Abstützrollen für das Fördergut und im Vorhandensein von Schließkörpern hinter den einzelnen Saugöffnungen des Hohlprofilbalkens 1. Im übrigen stimmen die Ausführungsbeispiele weitgehend überein, so dass die übereinstimmenden Merkmale nachstehend nicht nochmals im Detail beschrieben werden müssen, sondern insoweit auf die vorstehende Beschreibung der Fig. 1 bis 6 verwiesen werden kann.

Bei dem in den Fig. 10 bis 13 dargestellten Ausführungsbeispiel ist der auf der Vorderseite des Hohlprofilbalkens 1 gebildete Unterdruckkanal 15 durch Seitenwände 16' begrenzt; es handelt sich bei diesen um im Querschnitt L-förmige Leisten, die mit ihrem zur Laufebene 6 senkrechten Schenkel seitlich am Hohlprofilbalken 1 befestigt sind und mit ihrem anderen, der Laufebene 6 parallelen Schenkel bis dicht an die Laufebene heranreichen, wobei dieser Schenkel vom Hohlprofilbalken 1 fortweist.

Oberhalb des Hohlprofilbalkens 1 ist eine weitere im Querschnitt L-förmige Leiste 36 vorgesehen; sie ist mit ihrem zur Laufebene 6 senkrechten Schenkel oberhalb der Rollen 14, welche den oberen Riemen 3 abstützen, an deren Achsen befestigt; der zur Laufebene 6 parallele Schenkel der Leiste 36 ist gegen den Hohlprofilbalken 1 gerichtet und liegt mit seiner Vorderseite ebenfalls dicht hinter der Laufebene 6.

Die Riemen 3 sind im vorliegenden Ausführungsbeispiel T-förmige Keilriemen mit einem beidseits des keilförmigen T-Fußes an der Unterseite des Querbalkens des T-Profils angebrachten Verzahnung 37. Auf der Vorderseite der Riemen 3 ist ein vorspringender, längsverlaufender, mittig angeordneter Streifen 38 angeordnet, der schmaler ist als der Riemen 3. Dadurch sind beidseits dieses vorspringenden Streifens 38 zwei Stufen 39 gebildet, die zu zwei entsprechend zurückversetzten Randstreifen 40 und 41 führen. Am Arbeitstrum 3a der Riemen 3 definieren deren vorspringende Streifen 38 die Lage der Laufebene 6. Die Breite der vorspringenden Streifen 38 ist so auf den Abstand der beiden Leisten 16 und 36 abgestimmt, dass der Streifen 38 sich mit wenig seitlichem Spielraum zwischen die zur Laufebene 6 parallelen Schenkel der beiden Leisten 16' und 36 einfügt, wobei er geringfügig über deren Vorderseite vorsteht und dabei mit seinen beiden Rand streifen 40 und 41 an der Rückseite der Leisten 16' und 36 anliegt.

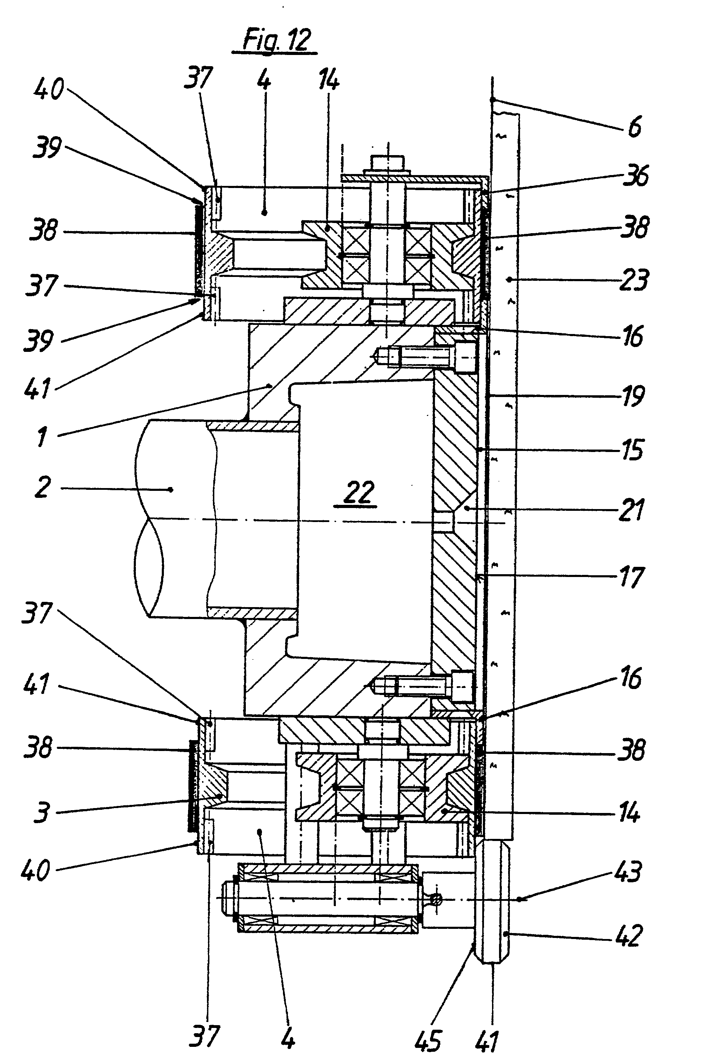

Bei dem in Fig. 12 unterhalb des Hohlprofilbalkens 1 angeordneten Riemen 3 ist nur eine winkelförmige Leiste 16' vorgesehen, welche gleich ausgebildet ist wie die entsprechende winkelförmige Leiste 16' oberhalb des Hohlprofilbalkens 1 und dieselbe Aufgabe wie diese übernimmt. Anstelle des in Fig. 12 oberhalb des Hohlprofilbalkens vorgesehenen weiteren Leiste 36 ist jedoch unterhalb des Hohlprofilbalkens und unterhalb der dort vorgesehenen Rollen 14 eine Zeile von Rollen 42 mit senkrecht zur Laufebene 6 verlaufender Drehachse 43 vorgesehen. Diese Rollen 42 haben eine überwiegend vor der Laufebene 6 liegende Lauffläche 44 und liegen mit einem Teil ihrer hinter der Lauffläche 6 liegenden Flanke 45 an dem unteren Randstreifen 41 des Riemens an und sind ihm dadurch eine Stütze. Die Rollen 42 dienen weiterhin zum Abstützen des Fördergutes (im gezeichneten Beispiel sind es Glastafeln) und sind vorzugsweise freilaufend gelagert.

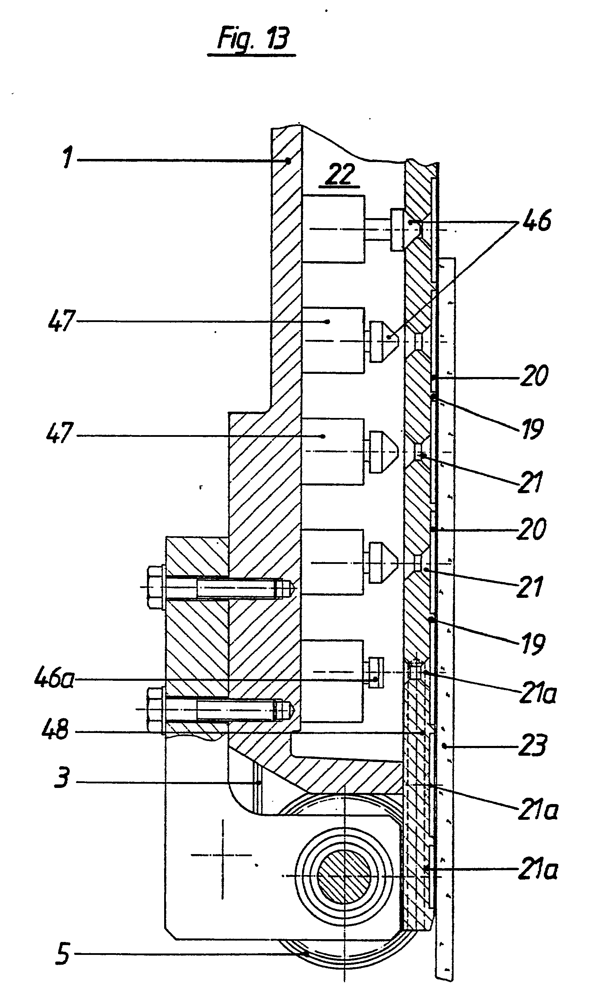

Figur 13 zeigt, wie die Riemen 3 am einen Ende des Hohlprofilbalkens um eine als Zahnrad ausgebildete, angetriebene Umlenkrolle 5' herumgeführt ist. Fig. 13 zeigt ferner die Anordnung von Ventilkegeln 46 im Innern des Hohlprofilbalkens 1 hinter den Saugöffnungen 21. Die Ventilkegel 46 sind unabhängig voneinander durch pneumatische Kurzhubzylinder 47 betätigbar und dienen dazu, Saugöffnungen zu verschließen, vor denen sich momentan kein zu förderndes Stückgut (Glastafel 23) befindet. Die Kurzhubzylinder 47 können zu diesem Zweck durch Sensoren gesteuert werden, die das Vorhandensein oder nicht-Vorhandensein eines Stückgutes vor einer Saugöffnung melden. Die Kurzhubzylinder 47 können aber auch durch eine rechnergestützte Programmsteuerung gesteuert werden. Die drei am Ende des Hohlprofilbalkens angeordneten Saugöffnungen 21a können nicht unabhängig voneinander verschlossen werden, da dazu der Platz fehlt; sie sind deshalb durch einen gemeinsamen Kanal 48 mit einander verbunden und werden gemeinsam durch einen Schließkörper 46a verschlossen.

## Patentansprüche

1. Vorrichtung für das schlupffreie Fördern von Stückgut, insbesondere von Glastafeln, in beliebiger Position, insbesondere in geneigter, vertikaler oder annähernd vertikaler Stellung, mit einem von zwei parallelen, endlosen, mit ihrer Vorderseite im wesentlichen in einer gemeinsamen Ebene (der Laufebene) angeordneten und durch eine Antriebsvorrichtung mit gleicher Geschwindigkeit in übereinstimmender Richtung angetriebenen Riemen beidseits flankierten, zur Laufebene hin offenen, nahezu bis zur Laufebene reichenden Unterdruckkanal, welcher in der Vorderseite eines langgestreckten Trägers ausgebildet ist und in welchem sich zumindest eine mit einer Unterdruckquelle verbundene Saugöffnung befindet, wobei zur seitlichen Abdichtung des Unterdruckkanals die Riemen beitragen, welche zugleich die auf das Stückgut ausgeübte Ansaugkraft auffangen, dadurch gekennzeichnet, dass das Arbeitstrum (3a) der Riemen (3) auf Rollen (14) gelagert ist.

2. Vorrichtung nach Anspruch 1, dadurch gekennzeichnet, dass der Unterdruckkanal (15) längsseits durch die beiden Riemen (3) begrenzt ist, deren Arbeitstrum (3a) mit ihren dem Unterdruckkanal (15) benachbarten Flanken dicht vor einer längsverlaufenden Seitenwand (16) des Trägers (1) verläuft.

3. Vorrichtung nach Anspruch 1 oder 2, dadurch gekennzeichnet, das der Unterdruckkanal (15) längsseits durch zwei vom Träger (1) in Richtung auf die Laufebene (6) vorstehende, nahezu bis zur Laufebene (6) reichende Seitenwände (16) begrenzt ist und dass die beiden Riemen (3) mit ihrem Arbeitstrum (3a) längs der Aussenseite dieser Seitenwände (16) verlaufen.

4. Vorrichtung nach Anspruch 2 oder 3, dadurch gekennzeichnet, dass in diesen Seitenwänden (16) des Trägers (1) Längsschlitze zur Bildung einer Labyrinthdichtung zwischen der Seitenwand (16) und dem Riemen (3) bzw. zwischen der Seitenwand (16) und dem Stückgut (23) vorgesehen sind.

5. Vorrichtung nach einem der vorstehenden Ansprüche, dadurch gekennzeichnet, dass zwischen dem Unterdruckkanal (15) und den beiden Riemen (3) jeweils ein längsverlaufendes, flexibles, am Träger (1) befestigtes Dichtungselement (24, 26) angeordnet ist.

6. Vorrichtung nach Anspruch 5, dadurch gekennzeichnet, dass das Dichtungselement (24) eine Leiste mit Borsten (25) ist, welche gegen die Laufebene (6) gerichtet sind und mindestens bis zur Laufebene (6) reichen.

7. Vorrichtung nach Anspruch 5, dadurch gekennzeichnet, dass das Dichtungselement eine Dichtlippe (26) ist, welche gegen die Laufebene (6) gerichtet ist und über dieses hinausreicht.

8. Vorrichtung nach Anspruch 7, dadurch gekennzeichnet, dass die Dichtlippe (26) in Richtung auf den benachbarten Riemen (3) abgebogen ist.

9. Vorrichtung nach Anspruch 1, dadurch gekennzeichnet, dass der Unterdruckkanal (15) längsseits durch zwei vom Träger (1) in Richtung auf die Laufebene (6) vorstehende, nahezu bis zur Laufebene (6) reichende Seitenwände (16) begrenzt ist, dass an die Seitenwände (16) jeweils eine sich in Laufrichtung der Riemen (3) erstreckende Leiste (16') anschließt, welche auf der dem Unterdruckkanal (150 abgewandten Seite der betreffenden Seitenwand (16) angeordnet ist und mit ihrer Vorderseite ebenfalls nahezu bis an die Laufebene (6) heranreicht, und dass die beiden Riemen (3) wenigstens in ihrem dem Unterdruckkanal (15) benachbarten Bereich auf ihrer Vorderseite eine längsverlaufende Stufe (39) haben, deren vor springender Teil (38) auf dem Arbeitstrum (3a) die Laufebene (6) definiert, während der demgegenüber zurückversetzte Randstreifen (40,41) der Riemen (3) mit seiner Vorderseite der Rückseite einer jener Leisten (16', 36) anliegt.

10. Vorrichrung nach Anspruch 9, dadurch gekennzeichnet, dass die Riemen (3) auf ihrer Vorderseite zwei längsverlaufende Stufen (39) haben, durch welche ein vorspringender, mittlerer, die Laufebene (6) definierender Streifen (38) und zwei demgegenüber zurückversetzte Randstreifen (40,41) gebildet sind, von denen der dem Unterdruckkanal (15) benachbarte Randstreifen (41) hinter der an die jeweilige Seitenwand (16) anschließenden Leiste (16') liegt,
dass beidseits am Träger (1) zwei weitere sich in Laufrichtung der Riemen (3) erstreckende Leisten (36) befestigt sind, die mit ihrer Vorderseite ebenfalls nahezu bis zur Laufebene (6) heranreichen und von der an die benachbarte Seitenwand (16) des Unterdruckkanals (15) anschließenden Leiste (16') einen Abstand haben, der größer ist als die Breite des mittleren Streifens (38) des Riemens (3), aber kleiner als die Breite des Riemens (3) insgesamt,
und dass der vom Unterdruckkanal (15) entfernt liegende Randstreifen (40) des jeweiligen Riemens (3) mit seiner Vorderseite der Rückseite der betreffenden weiteren Leiste (36) anliegt.

11. Vorrichtung nach Anspruch 10, dadurch gekennzeichnet, dass anstelle einer der weiteren, vom Unterdruckkanal (15) entfernt liegenden Leisten (36) eine Zeile von Rollen (42) vorgesehen ist, deren Achsen (43) im rechten Winkel zur Laufebene (6) orientiert sind,
dass die Rollen (42) vor der Laufebene (6) liegende Laufflächen (44) haben,
und dass die Rollen (42) mit ihrer hinter der Laufebene (6) liegenden Flanke (45) der Vorderseite des betreffenden Randstreifens (41) des einen Riemens (3) anliegen.

12. Vorrichtung nach Anspruch 9 oder 10, dadurch gekennzeichnet, dass der vorspringende Teil (38) der Riemen (3) eine Oberfläche mit hohem Reibungskoeffizienten und der demgegenüber zurückversetzte Randstreifen (40,41) eine Oberfläche mit kleinem Reibungskoeffizienten hat.

13. Vorrichtung nach einem der vorstehenden Ansprüche, dadurch gekennzeichnet, dass der Unterdruckkanal (15) durch quer zur Laufrichtung (18) angeordnete, höchstens bis zur Laufebene (6) reichende Stege (19), in eine Folge von Unterdruckkammern (20) unterteilt ist, in welchen wenigstens je eine mit der Unterdruckquelle (22) verbundene Saugöffnung (21) vorgesehen ist.

14. Vorrichtung nach Anspruch 13, dadurch gekennzeichnet, dass diese Stege (19) so angeordnet sind, dass die rechtwinklig zur Laufrichtung durch ihre Längsmittellinie gelegte Ebene jeweils die Achsen eines Paares von den die Riemen (3) stützenden Rollen (14) enthält.

15. Vorrichtung nach Anspruch 3 und 13, dadurch gekennzeichnet, dass die Vorderseiten der Seitenwände (16) und der Stege (19) in einer gemeinsamen Ebene liegen.

16. Vorrichtung nach Anspruch 3, 9, 10, 13 oder 15, dadurch gekennzeichnet, dass die Seitenwände (16), die Stege (19) und die Leisten (16', 36) in einem Abstand zwischen 0,5 und 0,8 mm hinter der Laufebene (6) enden.

17. Vorrichtung nach Anspruch 13, dadurch gekennzeichnet, dass im Träger (1) hinter den Saugöffnungen (21) jeweils ein Schließkörper (46) vorgesehen ist, und dass die Schließkörper (46) zum Verschließen der Saugöffnungen unabhängig voneinander betätigbar sind.

18. Vorrichtung nach einem der vorstehenden Ansprüche, dadurch gekennzeichnet, dass der Unterdruckkanal (15) zwischen 5 mm und 10 mm, vorzugsweise 8 mm tief ist.

19. Vorrichtung nach einem der vorstehenden Ansprüche, dadurch gekennzeichnet, dass die Rollen (14) als Riemenscheiben ausgebildet sind.

20. Vorrichtung nach einem der Ansprüche 1 bis 18, dadurch gekennzeichnet, dass es sich bei den Rollen (14), die das Arbeitstrum (3a) der beiden Riemen (3) unterstützen, um die Rollen zweier Rollenketten (28) handelt, deren vorderer Kettenzug (31) rückseitig jeweils einer zur Laufrichtung (18) parallelen, mit dem Träger (1) des Unterdruckkanals (15) staff verbundenen Schiene (32) anliegt.

21. Vorrichtung nach einem der vorstehenden Ansprüche, dadurch gekennzeichnet, dass die Riemen (3) Keilriemen sind.

22. Vorrichtung nach einem der vorstehenden Ansprüche, dadurch gekennzeichnet, dass die Riemen (3) im Querschnitt ein T-Profil aufweisen.

23. Vorrichtung nach Anspruch 22, dadurch gekennzeichnet, dass der Querbalken des T-Profils breiter als die Rollen (14) bzw. die Rollenkette ist.

24. Vorrichtung nach Anspruch 22 oder 23, dadurch gekennzeichnet, dass die Riemen (3) als Zahnriemen ausgebildet sind, deren Zähne (37) sich an dem Querbalken des T-Profils befinden, und dass die Riemen (3) über ein angetriebenes Umlenkzahnrad (5') geführt sind.

25. Vorrichtung nach Anspruch 24, dadurch gekennzeichnet, dass sich die Zähne (37) zu beiden Seiten des Fusses des T-Profils an dessen Querbalken befinden.

26. Vorrichtung nach Anspruch 24 oder 25, dadurch gekennzeichnet, das die das Arbeitstrum (3a) unterstützenden Rollen (14) keine Verzahnung aufweisen.

27. Vorrichtung nach Anspruch 26, dadurch gekennzeichnet, dass die Breite der das Arbeitstrum (3a) unterstützenden Rollen (14) übereinstimmt mit der zwischen den Zahnreihen gemessenen Breite der Riemen (3).

**Claims**

1. An apparatus for the slipless conveyance of discrete articles, particularly of glass plates, in any desired position, particularly in an inclined or vertical or approximately vertical position, comprising a vacuum channel, which is open to the plane of travel and extends almost as far as to a plane of travel and is formed in the forward surface of an elongate carrier and contains at least one suction port, which is connected to a vacuum source, which vacuum channel is flanked on opposite sides by two parallel endless belts, which have forward surfaces extending substantially in a common plane (the plane of travel) and are driven in the same direction by drive means at the same velocity and contribute to the lateral sealing of the vacuum channel and also take up the suction force which is exerted on the discrete articles, characterized in that the working course (3a) of the belts (3) is movably mounted on rollers (14).

2. An apparatus according to claim 1, characterized in that the vacuum channel (15) is defined on its longitudinal sides by the two belts (3) and the working course (3a) with its flanks disposed adjacent to the vacuum channel (15) extends closely in front of a longitudinally extending side wall (16) of the carrier (1).

3. An apparatus according to claim 1 or 2, characterized in that the vacuum channel (15) is defined on its longitudinal sides by two side walls (16), which protrude from the carrier (1) towards the plane of travel (6) and extend almost as far as to the plane of travel (6) and the two belts (3) extend with their working course (3a) along the outside of said side walls (16).

4. An apparatus according to claim 2 or 3, characterized in that said side walls (16) of the carrier (1) have longitudinal slots for forming a labyrinth seal between the side wall (16) and the belt (3) and between the side wall (16) and the discrete articles (23).

5. An apparatus according to any of the preceding claims, characterized in that a longitudinally extending, flexible sealing element (24, 25), which is secured to the carrier (1) is disposed between the vacuum channel (15) and each of the two belts (3).

6. An apparatus according to claim 5, characterized in that the sealing element (24) consists of a bar, which is provided with bristles (25), which are directed towards the plane of travel (6).

7. An apparatus according to claim 5, characterized in that the sealing element consists of a sealing lip (26), which is directed towards the plane of travel (6) and extends beyond the latter.

8. An apparatus according to claim 7, characterized in that the sealing lip (26) is laterally curved towards the adjacent belt (3).

9. An apparatus according to claim 1, characterized in that the vacuum channel (15) is defined on its longitudinal sides by two side walls (16), which protrude from the carrier (1) towards the plane of travel (6) and extend almost as far as to the plane of travel, each side wall (16) is adjoined by a bar (16') which extends in the direction of travel of the belts (8) and is disposed on that side of the associated side wall (16) which is remote from the vacuum channel (15) and said bar (16') has a forward surface which is also close to the plane of travel (6), and the two belts (3) at least in that portion which is adjacent to the vacuum channel (15) are formed in their forward surface with a longitudinally extending step (39), the protruding portion (38) of which defines the plane of travel (6) on the working course (3a) whereas the belts (3) have a relatively setback marginal strip (40, 41), which has a forward surface in contact with the rear surface of one of said bars (16', 36).

10. An apparatus according to claim 9, characterized in that the belts (3) are formed on their forward surface with two longitudinally extending steps (39), which define a protruding intermediate strip (38), which defines the plane of travel (6), and two relatively setback marginal strips (40, 41), and that (41) of said marginal strips which is adjacent to the vacuum channel (15) extends behind the bar (16') which adjoins the associated side wall (16), two additional bars (36) extending in the direction of travel of the belts (3) are secured to both sides of the carrier (1) and with their forward surface also extend close to the plane of travel (6) and are spaced from the bar (16') which adjoins the adjacent side wall (16) of the vacuum channel (15) by a distance which is larger than the width of the intermediate strip (38) of the belt (3) but smaller than the total width of the belt (3), and that marginal strip (40) of the associated belt (3) which is remote from the vacuum channel (15) has a forward surface in contact with the rear surface of the associated additional bar (36).

11. An apparatus according to claim 10, characterized in that one of the additional bars (36) which are remote from the vacuum channel (15) has been replaced by a row of rollers (42) having axes (43) extending at right angles to the plane of travel (6), the rollers (42) have treads (44) disposed in front of the plane of travel (6), and that flank (45) of the rollers (42) which is disposed behind the plane of travel (6) is in contact with the forward surface of the associated marginal strip (41) of the one belt (3).

12. An apparatus according to claim 9 or 10, characterized in that the protruding portion (38) of the belts (3) has a surface having a high coefficient of friction and the relatively setback marginal strip (40, 41) has a surface having a low coefficient of friction.

13. An apparatus according to any of the preceding claims, characterized in that the vacuum channel (15) is divided into a series of vacuum chambers (20) by webs (19), which extend transversely to the direction of travel (18) and do not extend beyond the plane of travel (6), and each of said vacuum chambers (20) contains a suction port (21), which communicates with the vacuum source (22).

14. An apparatus according to claim 13, characterized in that said webs (19) are so arranged that the plane which extends through the longitudinal centre plane of each web at right angles to the direction of travel contains the axes of a pair of rollers (14) which support the belts (3).

15. An apparatus according to claims 3 and 13, characterized in that the forward surfaces of the side walls (16) and of the webs (19) lie in a common plane.

16. An apparatus according to claim 3, 9, 10, 13 or 15, characterized in that the side walls (16), the webs (19) and the bars (16', 36) terminate behind the plane of travel (6) at a distance between 0.5 and 0.8 mm therefrom.

17. An apparatus according to claim 13, characterized in that a valve member (46) is provided in the carrier (1) behind each suction port (21) and the valve members (46) are operable independently of each other to close the suction ports.

18. An apparatus according to any of the preceding claims, characterized in that the vacuum channel (15) has a depth between 5 mm and 10 mm, preferably a depth of 8 mm.

19. An apparatus according to any of the preceding claims, characterized in that the rollers (14) consist of belt pulleys.

20. An apparatus according to any of claims 1 to 10, characterized in that the rollers (14) which support the working course (3a) of the two belts (3) are the rollers of two roller chains (28), the forward chain course (31) of which is in contact on its rear side with a rail (32), which is parallel to the direction of travel (18) and rigidly connected to the carrier (1) of the vacuum channel (15).

21. An apparatus according to any of the preceding claims, characterized in that the belts (3) consist of vee belts.

22. An apparatus according to any of the preceding claims, characterized in that the belts (3) are tee-shaped in cross-section.

23. An apparatus according to claim 22, characterized in that the crosspieces of the tee are wider than the rollers (14) or the roller chain.

24. An apparatus according to claim 22 or 23, characterized in that the belts (3) consist of toothed belts having teeth (37), which are provided on the crosspiece of the tee, and the belts (3) are trained around a driven reversing gear (5').

25. An apparatus according to claim 24, characterized in that the teeth (37) are provided on the crosspiece of the tee on both sides of the leg thereof.

26. An apparatus according to claim 24 or 25, characterized in that the rollers (14) which support the working course (3a) have no teeth.

27. An apparatus according to claim 26, characterized in that the width of the rollers (14) which support the working course (3a) equals the width of the belts (3) measured between the rows of teeth.

**Revendications**

1. Dispositif pour le transport, sans glissement, de marchandises de détail, en particulier, de pans de verre, dans n'importe quelle position, en particulier, dans une position inclinée, verticale ou à peu près verticale, ce dispositif comportant un canal à dépression ouvert en direction du plan de marche et s'étendant presque jusqu'à celui-ci, ce canal étant accompagné, des deux côtés, de deux courroies parallèles sans fin disposées avec leur face avant essentiellement dans un plan commun (plan de marche) et entraînées, par un dispositif de commande, à la même vitesse dans une direction concordante, ce canal étant réalisé dans la face avant d'un support allongé, tandis qu'au moins une ouverture d'aspiration reliée à une source de dépression se trouve dans ce canal, les courroies contribuant à l'étanchement latéral du canal à dépression, tout en absorbant, en même temps la force d'aspiration exercée sur les marchandises de détail, caractérisé en ce que le brin de travail (3a) des courroies (3) est monté sur des rouleaux (14).

2. Dispositif selon la revendication 1, caractérisé en ce que le canal à dépression (15) est délimité longitudinalement par les deux courroies (3) dont le brin de travail (3a) s'étend, avec ses flancs voisins du canal à dépression (15), juste devant une paroi latérale (16) du support (1), cette paroi s'étendant longitudinalement.

3. Dispositif selon la revendication 1 ou 2, caractérisé en ce que le canal à dépression (15) est délimité longitudinalement par deux parois latérales (16) ressortant en saillie du support (1) en direction du plan de marche (6) et allant presque jusqu'à celui-ci, tandis que les deux courroies (3) s'étendent, avec leur brin de travail (3a) le long de la face extérieure de ces parois latérales (16).

4. Dispositif selon la revendication 2 ou 3, caractérisé en ce que, dans ces parois latérales (16) du support (1), sont prévues des fentes longitudinales en vue de former un joint étanche en labyrinthe entre la paroi latérale (16) et la courroie (3) ou entre la paroi latérale (16) et les marchandises de détail (23).

5. Dispositif selon une des revendications précédentes, caractérisé en ce que, entre le canal à dépression (15) et les deux courroies (3) est disposé chaque fois un élément d'étanchement (24, 26) flexible, s'étendant longitudinalement et fixé au support (1).

6. Dispositif selon la revendication 5, caractérisé en ce que l'élément d'étanchement (24) est une languette comportant des brosses (25) qui sont dirigées contre le plan de marche (6) et qui vont au moins jusqu'à ce dernier.

7. Dispositif selon la revendication 5, caractérisé en ce que l'élément d'étanchement est une lèvre étanche (26) qui est dirigée contre le plan de marche (6) et qui s'étend au-delà de ce dernier.

8. Dispositif selon la revendication 7, caractérisé en ce que la lèvre étanche (26) est coudée en direction des courroies voisines (3).

9. Dispositif selon la revendication 1, caractérisé en ce que le canal à dépression (15) est délimité longitudinalement par deux parois latérales (16) ressortant en saillie du support (1) en direction du plan de marche (6) et allant presque jusqu'à ce dernier, et en ce que les parois latérales (16) sont chacune suivies d'une languette (16') s'étendant dans le sens de défilement des courroies (3), tout en étant disposées sur le côté de la paroi latérale concernée (16), qui est éloigné du canal à dépression (15) et atteignant également, par sa face avant, presque le plan de marche (6), et en ce que, au moins dans leurs zones voisines du canal à dépression (15) et sur leur face avant, les deux courroies (3) comportent un gradin longitudinal (39) dont la partie en saillie (38) définit le plan de marche (6) sur le brin de travail (3a), tandis que la bande marginale (40, 41) des courroies (3), qui se trouve en retrait, vient s'appliquer, avec sa face avant, sur la face dorsale de chaque languette (16', 36).

10. Dispositif selon la revendication 9, caractérisé en ce que, sur leur face avant, les courroies (3) comportent deux gradins (39) s'étendant longitudinalement et par lesquels sont formées une bande (38) centrale, ressortant en saillie et définissant le plan de marche (6), ainsi que deux bandes marginales en retrait (40, 41), la bande marginale (41) voisine du canal à dépression (15) étant située derrière la languette (16') faisant suite à chaque paroi latérale (16), en ce que, de part et d'autre, sur le support (1), sont fixées deux autres languettes (36) s'étendant dans le sens de défilement des courroies (3), ces languettes atteignant également, avec leur face frontale, presque le plan de marche (6), tandis qu'elles sont écartées de la languette (16') faisant suite à la paroi latérale voisine (16) du canal à dépression (15), d'une distance qui est supérieure à la largeur de la bande centrale (38) de la courroie (3), mais qui est inférieure à la largeur de la courroie (3) dans son ensemble, et en ce que la bande marginale (40) de chaque courroie (3), qui est éloignée du canal à dépression (15), vient s'appliquer, avec sa face avant, sur la face arrière de l'autre languette concernée.

11. Dispositif selon la revendication 10, caractérisé en ce que, au lieu d'une des languettes supplémentaires (36) éloignées du canal à dépression (15), on prévoit une ligne de rouleaux (42) dont les axes (43) sont orientés à angle droit par rapport au plan de marche (6), en ce que les rouleaux (42) ont des surfaces de roulement (44) situées devant le plan de marche (6), et en ce que les rouleaux (42) viennent s'appliquer, avec leur flanc (45) situé derrière le plan de marche (6), sur la face avant de la bande marginale concernée (41) d'une des courroies (3).

12. Dispositif selon la revendication 9 ou 10, caractérisé en ce que la partie en saillie (38) des courroies (3) a une surface d'un haut coefficient de friction, tandis que la bande marginale en retrait (40, 41) a une surface d'un faible coefficient de friction.

13. Dispositif selon une des revendications précédentes, caractérisé en ce que le canal à dépression (15) est subdivisé par des entretoises (19) disposées transversalement au sens de marche (18) et allant tout au plus jusqu'au plan de marche (6), pour former une succession de chambres à dépression (20) dans lesquelles on prévoit au moins chaque fois une ouverture d'aspiration (21) reliée à la source de dépression (22).

14. Dispositif selon la revendiation 13, caractérisé en ce que les entretoises (19) sont disposées de telle sorte que le plan situé perpendiculairement au sens de la marche par leur ligne centrale longitudinale, englobe chaque fois les axes d'une paire des rouleaux (14) supportant les courroies (3).

15. Dispositif selon les revendications 3 et 13, caractérisé en ce que les faces avant des parois latérales (16) et des entretoises (19) sont situées dans un plan commun.

16. Dispositif selon la revendication 3, 9, 10, 13 ou 15, caractérisé en ce que les parois latérales (16), les entretoises (19) et les languettes (16', 36) se terminent à une distance comprise entre 0,5 et 0,8 mm derrière le plan de marche (6).

17. Dispositif selon la revendication 13, caractérisé en ce que, dans le support 1 et derrière les ouvertures d'aspiration (21), est prévu chaque fois un corps de fermeture (46) et en ce que les corps de fermeture (46) peuvent être actionnés indépendamment l'un de l'autre pour fermer les ouvertures d'aspiration.

18. Dispositif selon une des revendications précédentes, caractérisé en ce que le canal à dépression (15) a une profondeur se situant entre 5 mm et 10 mm, de prérérence, une profondeur de 8 mm.

19. Dispositif selon une des revendications précédentes, caractérisé en ce que les rouleaux (14) sont réalisés sous forme de poulies.

20. Dispositif selon une des revendications 1 à 18, caractérisé en ce que, dans le cas des rouleaux (14) qui soutiennent le brin de travail (3a) des deux courroies (3), il s'agit des rouleaux de deux chaînes (28) dont la portée avant (31) vient s'appliquer par l'arrière chaque fois sur un rail (32) parallèle au sens de marche (18) et assemblé rigidement au support (1) du canal à dépression (15).

21. Dispositif selon une des revendications précédentes, caractérisé en ce que les courroies (3) sont des courroies trapézoïdales.

22. Dispositif selon une des revendications précédentes, caractérisé en ce que les courroies (3) ont, en section transversale, un profil en T.

23. Dispositif selon la revendication 22, caractérisé en ce que l'aile du profilé en T est plus large que les rouleaux (14) ou que la chaîne à rouleaux.

24. Dispositif selon la revendication 22 ou 23, caractérisé en ce que les courroies (3) sont réalisées sous forme de courroies dentées dont les dents (37) se trouvent sur l'aile du profilé en T et en ce que les courroies (3) sont guidées par une roue dentée de guidage entraînée (5'),

25. Dispositif selon la revendication 24, caractérisé en ce que les dents (37) se trouvent en direction des deux côtés du pied du profilé en T, sur l'aile de celui-ci.

26. Dispositif selon la revendication 24 ou 25, caractérisé en ce que les rouleaux (14) soutenant le brin de travail (3a) ne comportent aucune dent.

27. Dispositif selon la revendication 26, caractérisé en ce que la largeur des rouleaux (14) soutenant le brin de travail (3a) concorde avec la largeur des courroies (3), mesurée entre les rangées de dents.

EP 0 225 429 B1

## Fig. 1

## Fig. 2

## Fig. 3

Fig. 4

Fig. 5

EP 0 225 429 B1

Fig. 6

_Fig.7_

_Fig.8_

_Einzelheit X_

Fig. 9

## Fig. 10

40 41 3 16 XII 36 19 20 21 1

XII XIII

3 16 18 42

XII

## Fig. 11

5 3 2 2 1 4

42 18 14 36 3a 6

EP 0 225 429 B1

EP 0 225 429 B1

## Fig. 12

## Fig. 13